# EUROPÄISCHE PATENTSCHRIFT

(11) **EP 1 099 538 B1**
(45) Veröffentlichungstag und Bekanntmachung des Hinweises auf die Patenterteilung: **22.12.2004**
(21) Anmeldenummer: 00810952.2
(22) Anmeldetag: 16.10.2000
(51) Int. Cl.: B29C 70/38, B29C 70/46

(54) **Verfahren und Vorrichtung zum Transfer und Positionieren von Endlosfaser-Bändern und zur Herstellung von faserverstärkten Strukturbauteilen**
Method and apparatus for transferring and positioning continuous fibre tapes and for manufacturing fibre reinforced composite structural parts
Procédé et dispositif de transfert et de positionnement des bandes en fibres continues et pour la fabrication des structures en matériau composite en fibres

(30) Priorität: 18.10.1999 CH 189199
(43) Veröffentlichungstag der Anmeldung: 16.05.2001
(73) Patentinhaber: RCC Regional Compact Car AG, 8700 Küsnacht (CH)
(72) Erfinder: Hüsler, Daniel, 6014 Littau (CH)

(56) Entgegenhaltungen:
- EP-A- 0 282 700
- EP-A- 0 511 936
- EP-A- 0 511 937
- US-A- 4 571 320

## Beschreibung

Die Erfindung betrifft ein Verfahren zum Transfer und Positionieren von Endlosfaser-Bändern oder -Strängen in einem Werkzeug und zur Herstellung von Strukturbauteilen aus faserverstärktem thermoplastischem Kunststoff gemäss Oberbegriff von Anspruch 1 sowie eine Vorrichtung zur Durchführung dieses Verfahrens.

Es ist das Ziel der Erfindung, eine kostengünstige automatisierte Serienproduktion von leichten, hochfesten, lasttragenden Strukturbauteilen aus endlosfaser-verstärkten Thermoplasten zu ermöglichen. Bisher bekannte Verfahren zur Herstellung von endlosfaser-verstärkten Thermoplasten waren sehr eingeschränkt bezüglich der damit herstellbaren Strukturbauteile. So sind Wickeltechniken bekannt oder Pultrusion, welche jedoch im wesentlichen nur einfache Profile mit konstantem Querschnitt ermöglichen. Durch Pressformen von flächigen thermoplastischen Endlosfaser-Halbzeugen wiederum kann nur eine beschränkte Formgebung bei relativ hohem Aufwand erreicht werden. Beim Langfaser-Fliesspressen andererseits sind wohl kurze Taktzeiten und kostengünstige Produktion möglich bei jedoch ungenügenden mechanischen Eigenschaften, da hier keine Endlosfaser-Verstärkung vorhanden ist.

Das Handling von thermoplastischen Endlosfaser-Bändern und -Strängen in geschmolzenem Zustand ist äusserst schwierig. Dagegen ist das Handling mit bekannten Verfahren und Vorrichtungen von duromeren Prepregs, welche relativ steif, unempfindlich und wenig klebrig sind, verhältnismässig einfach. Diese duromeren Verfahren sind für geschmolzene thermoplastische Bänder, welche äusserst klebrig, sehr weich und damit auch sehr empfindlich sind, nicht anwendbar.
Aus der EP-A-511 937 ist ein Verfahren und eine Anlage zur automatischen Verarbeitung von duromeren Prepregs bekannt. Dabei werden zugeschnittene Prepreg-Stücke mit einer Vorrichtung transferiert, welche Vakuumgreifer mit einem Abstossstift aufweisen gemäß dem einleitenden Teil des Anspruchs 1.

Es ist nun Aufgabe der vorliegenden Erfindung, ein Verfahren und eine Vorrichtung zum Transfer und Positionieren von geschmolzenen, thermoplastischen Endlosfaser-Bändern oder -Strängen in einem Werkzeug und zur Herstellung von hochfesten faserverstärkten Strukturbauteilen zu schaffen, welche eine kostengünstige automatisierte Serienproduktion mit kurzen Taktzeiten und die Herstellung von tragfähigen Strukturbauteilen in weitgehend beliebigen Formen ermöglichen.

Diese Aufgabe wird erfindungsgemäss gelöst durch ein Verfahren nach Anspruch 1 und mittels einer Vorrichtung nach Anspruch 14. Durch die Verwendung von abgelängten Endlosfaser-Bandstücken in plastifiziertem Zustand, welche einseitig mindestens an beiden Bandenden aufgenommen und positioniert in ein Werkzeug abgelegt werden mittels bewegbaren Greifern mit aktiven Abstreifern unmittelbar an ihren Berührungsflächen, die eine Anziehungskraft zum Aufnehmen und eine Abstossungskraft zum Ablegen der Bandstücke ausüben, können die Bandstücke rasch und genau in einer gewünschten Lage und Geometrie im Werkzeug positioniert werden. Es kann mit mehreren Bandstücken eine Tragstruktur gebildet werden und diese in einem Arbeitsgang, ohne Abkühlung zwischendurch, mit plastifizierter Langfaser-Masse zu einem hochfesten Strukturkörper verpresst werden. Dank dem einseitigen Erfassen, Positionieren und Ablegen der Bandstücke können diese in relativ komplizierte und weitgehend beliebige Formen in ein Werkzeug eingebracht werden. Damit können auf einfache Art in einem Herstellverfahren relativ kostengünstig und mit kurzen Taktzeiten leichte und tragfähige Struktur- und Formteile produziert werden.

Die abhängigen Patentansprüche betreffen vorteilhafte Weiterbildungen der Erfindung, die für verschiedene Anwendungen besondere Vorteile bezüglich Handling, Herstellbarkeit, mechanischen Eigenschaften, Herstellkosten sowie Zusatzfunktionen ermöglichen.

Im folgenden wird die Erfindung anhand von Ausführungsbeispielen und Figuren weiter erläutert. Dabei zeigen:
- Fig. 1: eine Anlage mit einer erfindungsgemässen Band-Transfervorrichtung mit Greifern, Verschieberahmen und Roboter sowie mit einer Endlosfaser-Bandpresse, einer Langfaser-Plastifiziervorrichtung und einer Presse mit Werkzeug,
- Fig. 2a, b: die Aufnahme, Positionierung und Ablage von Endlosfaser-Bandstücken mittels Greifern,
- Fig. 3a,b,c: Verschieben und Drehen von Endlosfaser-Bandstücken,
- Fig. 4a,b,c: segmentierte Vakuumgreifer mit Abstreifern an den Kontaktflächen,
- Fig. 5: ein Beispiel eines Greifers mit Doppelabstreifern,
- Fig. 6a, b: pneumatisch betätigte Abstreifer mit Ventilwirkung,
- Fig. 7: ein Beispiel eines Greifers für strangförmige Bandstücke mit nicht-ebenen Kontaktflächen,
- Fig. 8a, b: Beispiele von Strukturbauteilen mit Endlosfaser-Bandstücken und Langfaser-Matrix,
- Fig. 9a, b: ein Beispiel mit einem Metall-Zwischenstück als kraftaufnehmendes zweiteiliges Insert,
- Fig. 10: ein Beispiel eines Inserts an den Bandenden zweier Strukturbauteile, die ein Verbindungselement bilden.
- Fig. 11-13: Greifer mit Kaltabstreifern

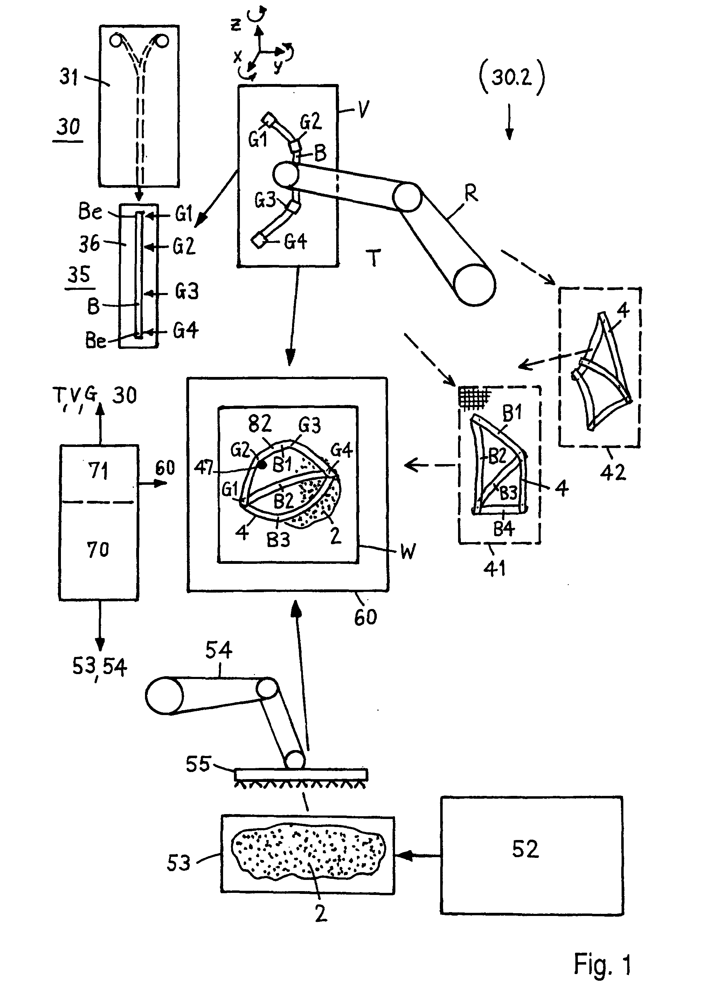

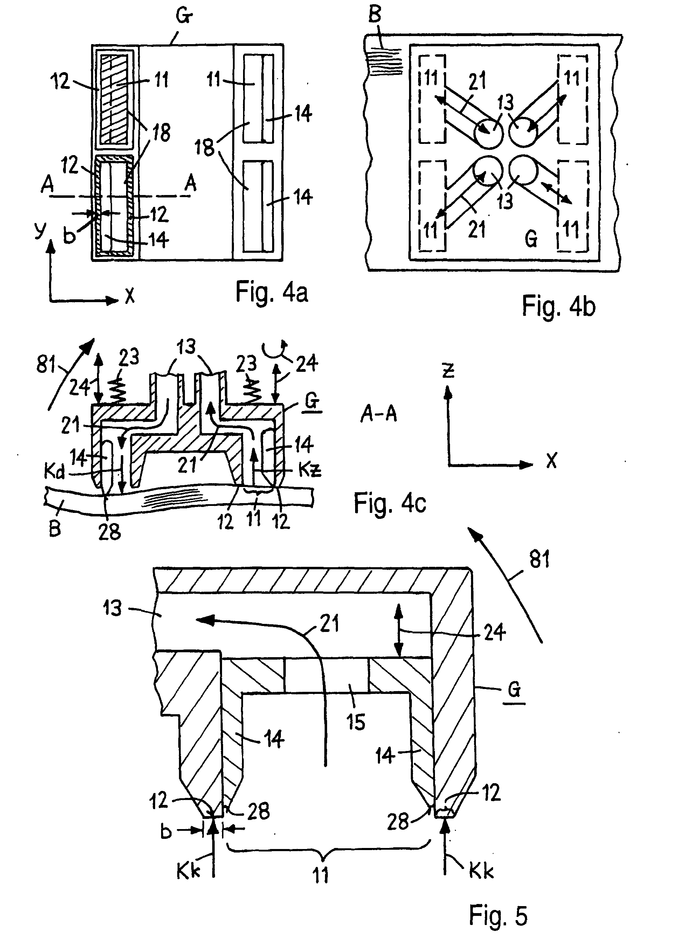

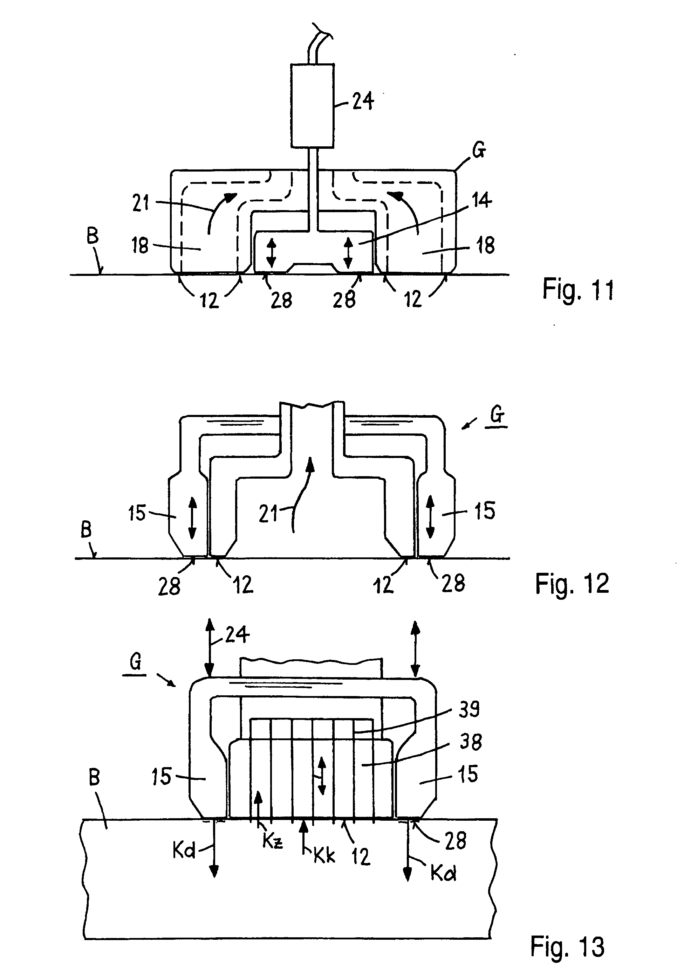

Fig. 1 zeigt eine Anlage zur Herstellung von thermoplastischen Strukturbauteilen mit einer Band-Transfereinrichtung T, welche Greifer G an einem Verschieberahmen V und einen Roboter R zum Bewegen des Verschieberahmens V aufweist, sowie mit einer Endlosfaser-Plastifiziereinrichtung 30 mit einer Ausgabestelle 35 für Endlosfaser-Bandstücke, einem Werkzeug W in einer Presse 60 und mit einer Langfaser-Plastifiziereinrichtung 52, mit einer Langfaser-Transfereinrichtung 54 und mit einer Systemsteuerung 70, welche auch eine Band-Transfersteuerung 71 enthält. Die Plastifiziereinrichtung 30 ist hier als Endlosfaser-Bandpresse 31 ausgebildet in der aus Prepregs, (z.B. Endlosfaser-Rovings), konsolidierte Endlosfaser-Bänder oder -Stränge produziert werden durch schrittweisen Vorschub, Aufschmelzen und Verpressen und anschliessendes Abschneiden der konsolidierten, plastifizierten Bandstücke in gewünschter Länge und durch Ausgabe auf ein Austragband 36. Von dieser Ausgabestelle 35 werden die Endlosfaser-Bandstücke B mindestens an ihren beiden Enden Be durch bewegbare Greifer G einseitig kontaktiert und aufgenommen durch Ausüben einer Anziehungskraft Kz zwischen Greifer und Bandstück, anschliessend zum Werkzeug W transferiert und positioniert in dieses abgelegt in einer gewünschten Ablagegeometrie 82. Hier wird das positionierte Endlosfaser-Bandstück B durch Ausüben einer Abstossungskraft Kd von den Greifern wieder abgelöst, wobei bewegbare, aktive Abstreifer (14, 15 in Fig. 4-6, 11-13) unmittelbar an den Kontaktflächen 12 der Greifer G eingesetzt werden. Besonders wirksam sind Kaltabstreifer, wie dies zu den Fig. 11-13 weiter erläutert wird.

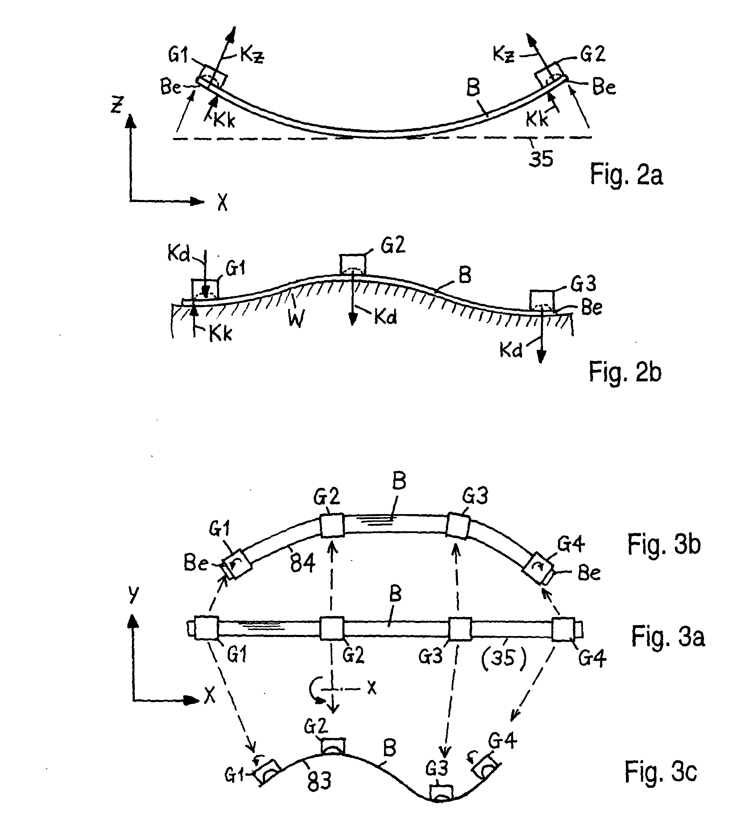

Wie auch zu den Fig. 2 und 3 weiter erläutert wird, wird diese Anziehungskraft Kz in einer vorteilhaften Ausführung mittels Vakuumunterstützung an Saugflächen 11 der Greifer G und einer Abstossungskraft Kd durch Druckerhöhung an den Saugflächen 11 der Greifer ausgeübt.

Durch positioniertes Ablegen von mehreren Bandstücken B wird auf einfache Art eine Endlosfaser-Tragstruktur 4 gebildet. Nach Einbringen von plastifizierter Langfaser-Masse 2 ins Werkzeug W wird die Endlosfaser-Tragstruktur 4 mit der Langfaser-Masse zusammen verspresst und verschmolzen zur Bildung eines Strukturbauteils 1. In diesem Beispiel von Fig. 1 wird die plastifizierte Langfaser-Masse 2 aus der Plastifiziereinrichtung 52 formgerecht auf ein Austragsband 53 ausgegeben und von einer Langfaser-Transfereinrichtung 54, z.B. einem Roboter, mittels Nadelgreifern 55, vor oder nach dem Einbringen der Endlosfaser-Bandstücke B, in das Werkzeug W der Presse eingelegt, worauf die plastifizierte Langfaser-Masse 2 mit der Tragstruktur 4 zusammen verpresst und konsolidiert wird.

Die Fig. 2 und 3 illustrieren das Handling der Endlosfaser-Bandstücke B weiter. Die Fig. 2a und 2b zeigen in Seitenansicht die Bewegung des Bandes in vertikaler Richtung. Beim Abheben des Bandes von der Ausgabestelle 35 nach Fig. 2a wird das plastifizierte Bandstück B in einer Kettenlinie durchhängen, so dass eine Abstandsverkürzung zwischen den beiden Greifern G1, G2 an den Bandenden Be sowie eine Verdrehung der Greifer tangential zur Bandoberfläche auftritt. Dies wird durch die aktive und passive Bewegbarkeit der Greifer G kompensiert bzw. ermöglicht. Fig. 2b zeigt das Ablegen eines Bandstücks in einem nach Bedarf geformten Werkzeug W, wobei das Band entsprechend gekrümmt positioniert wird. In Fig. 2 sind auch die durch die Greifer auf das Bandstück ausgeübten Kräfte dargestellt: eine Anziehungskraft Kz zum Abheben und zum Transfer der Bandstücke, die zusätzlich ergänzt wird durch eine Klebekraft Kk an den Kontaktflächen der Greifer. Nach dem Ablegen und zum Lösen des Bandes von den Greifern G mit Abstreifern 14, 15 wird eine Abstossungskraft Kd auf das Bandstück ausgeübt, die grösser ist als die Klebekraft Kk. Das Bandstück kann von mehreren Greifern aufgenommen und individuell steuerbar positioniert werden und auch sequentiell abgelegt werden. Im Beispiel von Fig. 2b wird das Bandstück zuerst an der Stelle des Greifers G2 und anschliessend an den Stellen G1 und G3 abgelegt. Durch sequentielles Ablegen kann die Ablegegeometrie ebenfalls variiert werden. Dabei können auch im Werkzeug angebrachte Fixierelemente 47 (in Fig. 1) eingesetzt werden, z.B. Fixierstifte, um welche herum das Bandstück B abgelegt und allfällig auch leicht gespannt werden kann.

Die Beispiele von Fig. 3a, b, c illustrieren die Bandverschiebungen in horizontaler Richtung. Fig. 3a zeigt das Bandstück B in gestrecktem Ausgangszustand auf der Ausgabestelle 35, welches hier von vier Greifern G1 bis G4 aufgenommen wird. Fig. 3b zeigt eine Verschiebung in horizontaler Y-Richtung entsprechend einer gewünschten Bahn 84, wobei nicht nur Abstandsänderungen zwischen den Greifern, sondern auch Drehungen der Greifer um die Z-Achse auszuführen sind, um die Kontaktflächen der Greifer immer tangential und am gleichen Ort der Bandstücke zu halten.

Das Beispiel von Fig. 3c zeigt ein Bandstück B, das um die X-Achse nach oben gedreht wurde und somit hochkant aufgestellt ist, anschliessend wird auch in dieser Lage eine Verschiebung, z.B. entsprechend einer gewünschten Bahn 83, durch die Greifer ausgeübt. Aus diesen Beispielen wird ersichtlich, dass die Greifer aktiv und individuell gesteuert bewegbar sind zur Ausrichtung der Kontaktflächen an die Bandoberfläche und zur gewünschten Positionierung des Bandstücks im Werkzeug. Die Greifer können zusätzlich auch passiv bewegbar sein, um sich in angemessenen Spielraum-Bereichen den Bewegungen des Bandstücks elastisch anzupassen.

Die Fig. 4a bis c zeigen das Beispiel eines erfindungsgemässen pneumatischen Greifers G in verschiedenen Ansichten:
von unten gesehen in Fig. 4a, von oben gesehen in Fig. 4b und im Schnitt A - A in Fig. 4c. Mit Vorteil können die Greifer mehrere Segmente 18 mit Saugflächen 11 aufweisen, so dass bei Undichtigkeit eines Segments das Bandstück von den anderen noch sicher gehalten wird. Der Greifer weist hier 2 mal 2 = 4 Segmente 18 mit je einer Saugfläche 11 auf. Die Luftströmungen sind mit Pfeilen 21 angegeben. Vorzugsweise überdecken die Saugflächen etwa die Breite des Bandstücks B. Die Breite der einzelnen Saugflächen ist auf die Dicke und damit die Elastizität des Bandstücks B abgestimmt. Als Beispiel eines starken Endlosfaser-Bandstücks können dessen Dimensionen z.B. 50 mm Breite und 3 - 6 mm Dicke aufweisen. Entsprechend sind dann die Saugflächen z.B. 10 mm breit und je zwei nebeneinanderliegende Segmente überdecken im wesentlichen die ganze Breite des Bandstücks B. Die auf der gesamten Saugfläche eines Greifers ausgeübte Saugkraft, bzw. die Anziehungskraft Kz, muss grösser sein als das Gewicht des zu transportierenden Bandabschnitts und die Saugfläche 11 der Greifer ist mit Vorteil mehrfach grösser als deren Kontaktfläche 12 mit dem Bandstück. Beim Ablegen des Bandstücks wiederum muss die Abstossungskraft Kd grösser sein als die Klebekraft Kk der geschmolzenen Bandstücke an den Kontaktflächen 12 der Greifer. Die Klebekraft Kk ist im wesentlichen proportional zur Kontaktfläche 12, weshalb diese einerseits möglichst klein gehalten wird, während anderseits die Kontaktfläche gross genug sein soll, um eine genügende Abdichtung zum Bandstück B für hinreichende Unterdruckkraft zu ermöglichen. Die Breite b der rahmenförmigen Kontaktfläche 12 kann z.B. ca. 1 mm betragen.

Der Unterdruck wird so dosiert, dass das Band einerseits sicher gehalten wird, auch wenn z.B. nur zwei von vier Segmenten dichthalten, und anderseits nicht so stark dosiert, dass das Bandstück zu stark in die Saugfläche hineingebogen wird. Beispielsweise kann ein Bandabschnitt pro Greifer ein Gewicht von 200 g aufweisen, während die Fläche der vier Segmente eines Greifers nach Fig. 4 z.B. 6 bis 8 cm² beträgt. Bei einem Unterdruck von - 0,1 bar ergibt dies schon eine mehr als genügende Anziehungskraft Kz von 6 - 8 N, entsprechend 600 - 800 g. Um auch bei Lecks eines Segments in den andern Segmenten einen genügenden Unterdruck aufrechtzuerhalten, können separate Druckluftzuleitungen 13 an den Segmenten 18 vorgesehen sein. Sehr wichtig für das einwandfreie Funktionieren der Greifer sind die aktiv bewegbaren Abstreifer 14 an den Kontaktflächen der Greifer, im Beispiel von Fig. 4 je an den Aussenkanten der Saugflächen 11 angeordnet, welche zum Ablösen des Bandstücks eingesetzt werden.

Die durch Druckerhöhung auf die Saugflächen und durch die Abstreifer ausgeübte Abstossungskraft Kd wird deutlich grösser ausgelegt als die Klebekraft Kk der geschmolzenen Endlosfaser-Bandstücke an den Kontaktflächen 12 der Greifer. Durch die Abstreifer 14 wird ebenfalls eine Abstossungskraft Kd ausgeübt, dabei können die Kontaktflächen 28 der Abstreifer mit dem Bandstück möglichst klein gehalten sein, d.h. im Prinzip laufen sie in eine verbreiterte Auflagekante aus. Wichtig ist, dass die Abstreifer nahe an den Kontaktflächen 12 der Greifer wirksam werden, so dass das weiche geschmolzene Bandstück B nicht verzogen und beschädigt wird. Die Ablösung kann auch dadurch unterstützt werden, dass die Greifer vom Bandstück weggekippt werden wie mit Pfeil 81 in Fig. 4c und 5 dargestellt ist. Der Greifer kann aber auch vom Band weggedreht werden.

Die Greifer sind vorzugsweise aktiv und passiv bewegbar, sowohl bezüglich Verschiebung als auch bezüglich Drehungen und Verschwenkungen in allen drei Dimensionen x, y, z, um damit den Ausgleich von Längenänderungen und Orientierungen der Bandabschnitte beim Bewegen, wie auch beispielsweise beim Kippen der Greifer beim Ablösen der Bandstücke, durchzuführen. Die Anordnung von aktiven und passiven Bewegungselementen zeigt Fig. 4c schematisch mit einer passiven Federung 23 und mit Pfeilen 24, welche Aktoren oder Stellelemente darstellen.

Fig. 5 zeigt ein Beispiel eines Abstreifers mit bewegbaren Abstreifern 14 beidseitig an den Längskanten der Kontaktflächen 12, hier in Form eines Doppelabstreifers 15. Dies ergibt eine weiter verbesserte Ablösung des Bandstücks von den Kontaktflächen.

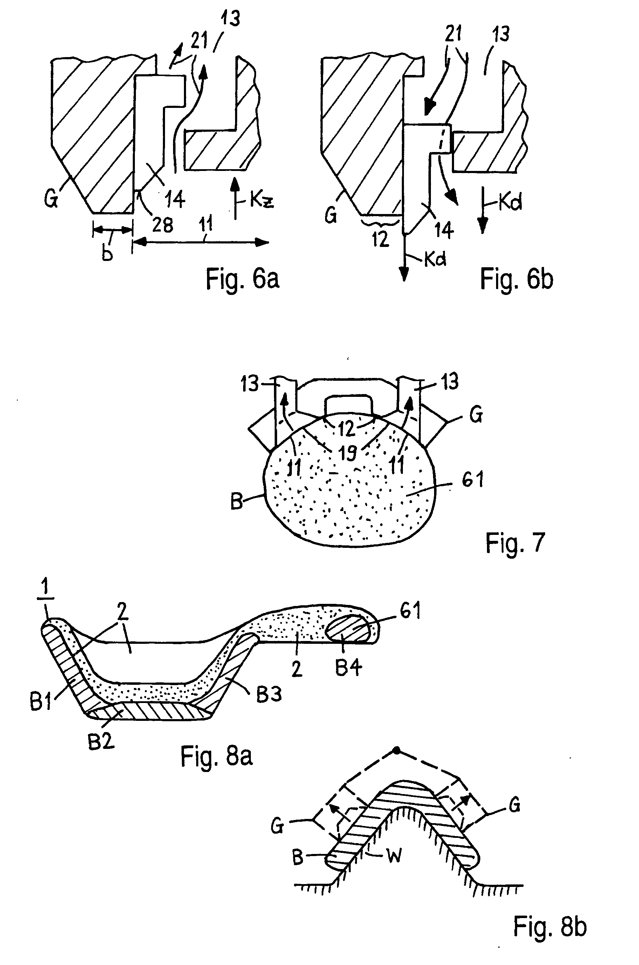

Fig. 6a und 6b zeigt ein Beispiel eines pneumatisch betätigten und bewegten Abstreifers in einem Greifer, welcher eine Ventilwirkung aufweist. Fig. 6a zeigt den Zustand mit angesaugtem Bandstück B, wobei der Abstreifer 14 durch den Unterdruck in der Zuleitung 13 ebenfalls nach oben gesaugt ist. In Fig. 6b wird zum Ablösen des Bandstücks B eine Druckerhöhung in der Zuleitung 13 ausgeführt, wodurch eine Abstossungskraft Kd sowohl auf die angesaugte Fläche des Bandstücks wie auch auf den Abstreifer 14 ausgeübt wird, welcher nach unten verschoben wird zur Ablösung des Bandstücks von der Kontaktfläche 12 des Greifers.

Um möglichst geringe Klebkräfte Kk zu generieren, wird die relativ kleine Kontaktfläche 12 zudem vorzugsweise mit einer anti-adhäsiven Oberfläche ausgestattet. Vorzugsweise werden die Greifer auch aus temperaturbeständigem, thermisch isolierendem Material hergestellt, um eine Wärmeabfuhr und damit eine Abkühlung der Bandstücke zu vermeiden. Als besonders vorteilhaftes Material kann PTFE (Teflon) eingesetzt werden, das sowohl thermisch isolierend wie auch anti-adhäsiv ist, z.B. 10 - 20% Glaskügelchen aufweisendes PTFE, das zudem bessere mechanische Eigenschaften aufweist. Es können auch andere mechanische Materialien für die Greifer eingesetzt werden, z.B. Keramik mit anti-adhäsiv beschichteter Oberfläche.

Fig. 7 zeigt eine Ausführung eines strangförmigen Bandes 61 mit rundem Querschnitt, das beispielsweise aus tordierten Endlosfasern bestehen kann. Solche Stränge als Bandstücke B eignen sich besonders für Ablagegeometrien mit räumlich starken Krümmungen. Ein auf solche Strangstücke ausgerichteter Greifer kann z.B. nicht-ebene Segmente 19 aufweisen zwecks optimaler Aufnahme eines nicht-flachen Bandstücks. Auch flache Bandstücke mit im wesentlichen rechteckigen Querschnitten können Faseraufbauten verschiedener Art aufweisen. Am einfachsten sind UD-Stränge mit parallelen Fasern; je nach Anwendung können aber breite, flache Bänder, beispielsweise auch eine Kombination von längs- und diagonal orientierten Endlosfasern, eingesetzt werden.

Die Fig. 8a und b zeigen im Querschnitt Strukturbauteile 1, die aus verlegten Bandstücken B und mit diesen zusammen verpresster Langfaser-Matrix 2 bestehen. In Fig. 8a bilden drei nacheinander verlegte Bandstücke B1 bis B3 ein U-Profil, wobei die Bandstücke sich leicht überlappen können. Nach dem Bandstück B2 wurden die Bandstücke B1 und B3 nach oben gedreht (wie z.B. in Fig. 3c gezeigt) leicht überlappend abgelegt. Ein Bandstück B4 weist hier einen anderen Querschnitt auf und kann beispielsweise von einer zweiten Bandpresse (30.2 in Fig. 1) gleichzeitig und parallel zu den Bändern B1 bis B3 einer ersten Bandpresse bereitgestellt werden.

Die Fig. 8b zeigt ein Beispiel eines breiten Bandstücks B, das räumlich gebogen schalenförmig über eine entsprechende Ausformung des Werkzeugs W abgelegt wird. Dazu kann auch eine andere Variante in Form eines zweiteiligen Greifers eingesetzt werden.

Wie zur Anlage von Fig. 1 erläutert wird, ist die kombinierte Fertigung von Strukturbauteilen 1, die aus Endlosfaser-Bandstücken B und Langfaser-Matrix 2 bestehen, besonders vorteilhaft auch bezüglich der resultierenden mechanischen Eigenschaften. Insbesondere bewirkt die luftige, watteartige Struktur der plastifizierten Langfaser-Masse 2 beim Verpressen ein vollständiges Entweichen aller Lufteinschlüsse, wodurch eine gute Verbindung von Endlosfaser-Bandstücken und Langfaser-Matrix erreicht wird.

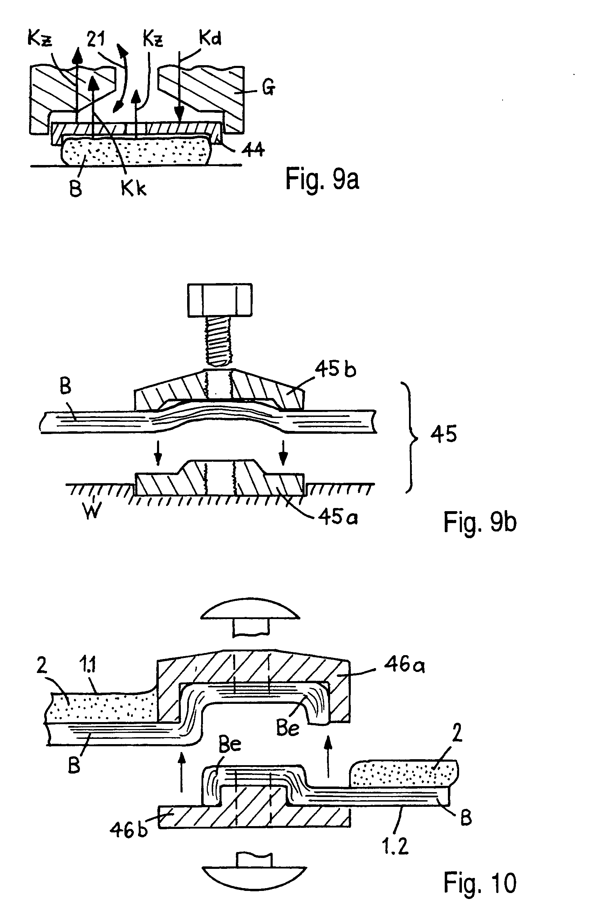

Die Fig. 9a und b zeigen eine weitere Variante des erfindungsgemässen Verfahrens, bei welcher an einem Greifer vor dem Kontaktieren des Bandstücks B ein Zwischenstück 44 auf die Saugfläche des Greifers aufgebracht und mit Vakuumunterstützung gehalten wird. Dann wird das Zwischenstück mit dem Bandstück kontaktiert und dadurch angeklebt. Nach dem Positionieren im Werkzeug wird das Zwischenstück 44 zusammen mit dem Bandstück B mittels Druckerhöhung vom Greifer G abgelöst. Beim Aufnehmen des Bandes wirkt dabei eine Saugkraft Kz sowohl auf das Metallzwischenstück 44 wie auch auf das Bandstück, während beim Ablegen eine Druckkraft Kd das nicht-klebende Zwischenstück abstösst. Ein solches Zwischenstück oder Insert kann z.B. als Fixierelement dienen und eine formschlüssige Verbindung zum Bandstück B aufweisen.

Fig. 9b zeigt ein weiteres Beispiel mit einem zweiteiligen Insert 45, welches beispielsweise eine formschlüssige Verbindung mit dem Endlosfaser-Bandstück ergibt und welches als kraftaufnehmendes Insert dienen kann, beispielsweise für eine Schraube einer Gurtverankerung, die später an das fertige Strukturbauteil 1 angebracht werden kann. Zur Herstellung wird zuerst der erste Teil 45a des zweiteiligen Inserts im Werkzeug W positioniert, worauf der zweite Teil des Inserts 45b, welches vom Greifer aufgenommen wird, mit dem dazwischen liegenden plastifizierten Bandstück B auf den ersten Teil positioniert und fixiert und anschliessend verpresst wird.

Fig. 10 zeigt ein weiteres Beispiel von Inserts zur Bildung verschiedener Funktionselemente. Hier werden an zwei verschiedenen Strukturbauteilen 1.1 und 1.2 je ein Teil eines formschlüssigen Verbindungselements 46a bzw. 46b durch das beschriebene Verfahren integriert. Im ersten Strukturbauteil 1.1 wird das Insert 46a als Zwischenstück wie beschrieben mit dem Ende des Bandstücks B positioniert und verpresst. Analog dazu wird beim Strukturbauteil 1.2 das komplementäre Zwischenstück 46b mit dessen Bandende Be verpresst. So bilden die beiden Inserts 46a und 46b zusammen ein formschlüssiges Verbindungselement an äusseren Verbindungsstellen der Strukturbauteile 1.1 und 1.2, die beispielsweise durch Nieten oder Verschrauben formschlüssig miteinander verbunden werden können. Auch die Verbindung der Endlosfaser-Bandstücke B mit den Inserts 46a bzw. 46b ist formschlüssig.

Besonders vorteilhaft in ihrer Wirkungsweise sind Kaltabstreifer, wie dies zu den Beispielen in den Fig. 11 - 13 erläutert wird. Kaltabstreifer bestehen aus einem Material mit hoher Wärmeleitfähigkeit, z.B. aus einem Metallstreifen aus Kupfer mit glatter Oberfläche, welche zum Ablösen des Bandstücks kurz mit dem Bandstück in Berührung gebracht werden. Die Berührung mit dem kalten Metall bewirkt eine rasche Verfestigung nur der Oberfläche des Bandstücks, welches dadurch nicht mehr am Abstreifer klebt, sondern von diesem abspringt. Der Kaltabstreifer wird von der Umgebungsluft gekühlt und bleibt dank relativ grosser Oberfläche und relativ kleiner Kontaktfläche 28 mit dem Band verhältnismässig kalt, d.h. weit unter der Erstarrungstemperatur des Thermoplasts. Damit kann das Bandstück B gar nicht richtig am Abstreifer ankleben bzw. es wird sofort abgesprengt. Die Kontaktflächen 28 des Abstreifers sind wiederum in unmittelbarer Nähe der Greiferkontaktflächen 12 angeordnet, so dass ein sehr schonendes und gleichmässiges Ablösen des Bandstücks vom Greifer erreicht wird.

Fig. 11 zeigt ein Beispiel eines Vakuumgreifers analog zu Fig. 4, jedoch mit einem Kaltabstreifer 14 als flachem Metallstreifen quer zum Bandstück B, welcher zwischen den Vakuumsegmenten 18 angeordnet ist, so dass die Kontaktflächen 28 des Abstreifers nahe an den Greiferkontaktflächen 12 liegen. Der Abstreifer 14 wird z.B. durch einen pneumatischen Zylinder 24 bewegt.

Fig. 12 zeigt ein Beispiel eines Vakuumgreifers ähnlich Fig. 5 mit einem Doppelabstreifer, wobei hier jedoch der kalte Doppelabstreifer 15 beidseitig aussen am Greifer G angeordnet ist. Auch hier liegen die Abstreiferkontaktflächen 28 unmittelbar neben den Kontaktflächen 12 des Greifers.

Fig. 13 illustriert ein Beispiel mit einem mechanischen Greifer 38 anstelle eines Vakuumgreifers. Die Anziehungskraft Kz zum Aufnehmen des Bandstücks B wird hier beispielsweise mittels geneigter bewegbarer Nadeln 39 ausgeübt, zusammen mit der Klebekraft Kk des Bandstücks B an der Kontaktfläche 12 des Greifers 38. Zum Ablösen des Bandstücks und Ausüben der Abstossungskraft Kd wird der Kaltabstreifer 15 aussen auf beiden Seiten der Greiferkontaktfläche 12 kurz gegen das Bandstück B bewegt.

In der Anlage von Fig. 1 werden weitere mögliche und vorteilhafte Varianten der Herstellung von Strukturbauteilen illustriert. Es können Strukturbauteile gebildet werden, die mehrere entsprechend positionierte Bandstücke B1 bis B4 enthalten, welche eine Tragstruktur 4 bilden und wobei diese Tragstruktur mit Langfaser-Material 2 zusammen verpresst ist.

Diese aus mehreren Bandstücken B gebildete Tragstruktur 4 kann in einer weiteren Variante auf ein Transfergitter 41 abgelegt werden, z.B. bestehend aus einem Garngitter oder Glasfasergitter, welches anschliessend in das Werkzeug W transferiert wird und im plastischen Zustand zusammen mit der Langfaser-Masse 2 verpresst wird. In einer weiteren Variante können die Endlosfaser-Bandstücke auf eine Hilfsform 42 positioniert abgelegt werden zur Bildung der vorgeformten gewünschten Tragstruktur 4, die anschliessend in der Presse mit der plastifizierten Langfaser-Masse 2 zusammen verpresst wird. Dabei kann der Transfer von der Hilfsform 42 auch leicht abgekühlt und so mit formfester Tragstruktur erfolgen, worauf die Tragstruktur in der Presse mindestens oberflächlich wieder aufgeschmolzen wird für das anschliessende Verpressen mit der Langfaser-Masse.

Eine Anlage kann auch mehr als eine Endlosfaser-Plastifiziereinrichtung 30, 30.2 aufweisen mit zugeordneten Band-Transfereinrichtungen T, so dass beispielsweise verschiedenartige Bandstücke parallel hergestellt, transferiert und zusammen verarbeitet werden können. Zur Steuerung der Band-Transfereinrichtung T, wie auch der ganzen Anlage, sind entsprechend Sensoren und Detektoren eingesetzt; und zur Erreichung optimaler Temperaturen in den verschiedenen Herstellschritten kann auch stellenweise eine thermische Konditionierung eingesetzt sein, insbesondere, um ein vollständiges Verschmelzen von Endlosfaser-Bandstücken B und Tragstrukturen 4 mit der Langfaser-Masse 2 sicherzustellen.

Als Matrix-Materialien eignen sich beispielsweise Thermoplaste wie Polypropylen (PP), Polyamide (PA), Polyethylen-Therephthalat (PET), Polybuthylen-Therephthalat (PBT) und als Faserverstärkung Glas-, Kohle- oder Aramidfasern mit einem Fasergehalt in den Endlosfaser-Bändern von z.B. 35 - 60 Vol% und in der Langfaser-Matrix von z.B. 15 - 25 Vol%. Damit lassen sich hochfeste Strukturbauteile rasch und kostengünstig herstellen. Die Prozesstemperaturen betragen beispielsweise für PP-glasfaserverstärkte Thermoplaste 230 - 250°C, für die plastifizierten Bandstücke und Langfaser-Massen und beim Verpressen in der Presse zum Verschmelzen der Endlosfaser-Bandstücke B mit der Langfaser-Matrix 2 mindesten 200°C.

Mit der erfindungsgemässen Vorrichtung und dem Verfahren können beispielsweise folgende wichtige Vorteile erreicht werden:
- durch das einseitige schonende Erfassen optimales Handling und Ablage der Bandstücke in weitgehend beliebigen Geometrieformen und Orientierungen,
- sichere, flexible und schnelle Handhabung, damit kann das heisse thermoplastische Material auch im optimalen Temperaturbereich verarbeitet werden. Insgesamt können so Strukturbauteile und Tragstrukturen verschiedenster Art auf einfache, kostengünstige Art hergestellt und die Erreichung guter mechanischer Eigenschaften sichergestellt werden.

Im Prinzip könnten die erfindungsgemässen Greifer auch zum Handling von nicht ausgehärteten, klebrigen Duromer-Prepregs eingesetzt werden, was, wie schon erläutert, jedoch sehr viel einfacher ist.

Im Rahmen dieser Beschreibung werden die folgenden Bezeichnungen verwendet:
- B: Endlosfaser-Bandstücke
- Be: Bandenden
- R: Roboter
- T: Band-Transfervorrichtung
- V: Verschieberahmen
- G: Greifer, Vakuumgreifer
- W: Werkzeug
- Kz: Anziehungskraft
- Kd: Abstossungskraft
- Kk: Klebekraft
- b: Kontaktbreite
- x, y, z: Raumrichtungen

- 1: Strukturbauteil
- 2: Langfaser-Masse, lufthaltige, plastifizierte
- 4: Tragstruktur
- 11: Saugflächen
- 12: Kontaktflächen von G, rahmenförmige
- 13: Druckluftzuführung
- 14: Abstreifer
- 15: Doppelabstreifer
- 18: Segmente
- 19: nicht-ebene Segmente
- 21: Luftströmung
- 23: Federung
- 24: Aktoren, Stellelemente
- 28: Kontaktflächen der Abstreifer
- 30: EF-Plastifiziereinrichtung
- 31: EF-Bandpresse
- 35: Ausgabestelle
- 36: Austragband
- 38: mechanischer Greifer
- 39: geneigte Nadeln
- 41: Transfer-Gitter
- 42: Hilfsform
- 44: Zwischenstück, Insert
- 45: kraftaufnehmendes Insert
- 45a, b: Insert, zweiteilig
- 46: äusseres Verbindungselement
- 47: Fixierelemente
- 52: LF-Plastifiziervorrichtung
- 53: LF-Austragsband
- 54: LF-Transfereinrichtung
- 55: Nadelgreifer
- 60: Presse
- 61: strangförmiges Band
- 70: Systemsteuerung
- 71: Steuerung Band-Transfer
- 81: Kippen der Greifer zum Ablösen
- 82: gewünschte Ablagegeometrie, vorgebbare Lage
- 83: B gedreht
- 84: B verschoben

## Patentansprüche

1. Verfahren zum Transfer und Positionieren von Endlosfaser-Bändern oder -Strängen in einem Werkzeug und zur Herstellung von Strukturbauteilen aus faserverstärktem Kunststoff, wobei
Endlosfaser-Bandstücke von einer Ausgabestelle (35) mittels einer Band-Transfervorrichtung (T) von bewegbaren Greifern (G) mit Kontaktflächen (12) mindestens an beiden Bandenden (Be) einseitig kontaktiert und aufgenommen werden durch Ausüben einer Anziehungskraft (Kz) und anschliessend zu einem Werkzeug transferiert und positioniert abgelegt
werden, **dadurch gekennzeichnet, dass**
thermoplastische, plastifizierte, vorkonsolidierte und abgelängte Endlosfaser-Bandstücke (B) erzeugt und die positionierten Endlosfaser-Bandstücke (B) im Werkzeug (W) durch Ausüben einer Abstossungskraft (Kd) von der Band-Transfervorrichtung (T) wieder abgelöst werden, wobei bewegbare aktive Abstreifer (14, 15) unmittelbar an den Kontaktflächen (12) der Greifer (G) eingesetzt werden.

2. Verfahren nach Anspruch 1, **dadurch gekennzeichnet, dass** zum Ablösen, von der Umgebungsluft gekühlte Abstreifer (14, 15) mit hoher Wärmeleitfähigkeit kurz gegen das Bandstück (B) gedrückt werden.

3. Verfahren nach Anspruch 1 oder 2, **dadurch gekennzeichnet, dass** eine Anziehungskraft (Kz) mittels Vakuum-Unterstützung an Saugflächen (11) der Greifer und eine Abstossungskraft (Kd) mittels Druckerhöhung an den Saugflächen (11) der Greifer ausgeübt wird.

4. Verfahren nach einem der vorangehenden Ansprüche, **dadurch gekennzeichnet, dass** die auf die gesamte Saugfläche (11) der Greifer ausgeübte Saugkraft bzw. Anziehungskraft (Kz) grösser ist als das Gewicht des zu transportierenden Bandstücks und dass die Saugfläche (11) der Greifer mehrfach grösser ist als deren Kontaktfläche (12) mit dem Bandstück (B).

5. Verfahren nach einem der vorangehenden Ansprüchen, **dadurch gekennzeichnet, dass** die Greifer (G) der Band-Transfervorrichtung individuell und gesteuer bewegbar sind zur Ausrichtung der Kontaktflächen (12) an die Bandoberfläche und zur gewünschten Positionierung (82) des Bandstücks im Werkzeug.

6. Verfahren nach einem der vorangehenden Ansprüche, **dadurch gekennzeichnet, dass** mehrere Greifer (Gi) das Bandstück an mehreren Stellen aufnehmen und individuell steuerbar positionieren und sequentiell ablegen.

7. Verfahren nach einem der vorangehenden Ansprüche, **dadurch gekennzeichnet, dass** die Abstreifer (14, 15) durch Überdruck pneumatisch bewegt werden.

8. Verfahren nach einem der vorangehenden Ansprüche, **dadurch gekennzeichnet, dass** die Greifer zum Ablösen des Bandstücks gekippt (81) werden.

9. Verfahren nach einem der vorangehenden Ansprüche, **dadurch gekennzeichnet, dass** an einem Greifer vor dem Kontaktieren des Bandstücks ein Zwischenstück (44, 45) (Insert) auf eine Saugfläche (11) des Greifers aufgebracht und mit Vakuum-Unterstützung gehalten wird, dann das Zwischenstück mit dem Bandstück kontaktiert und angeklebt wird und dass das Zwischenstück (44) nach dem Positionieren im Werkzeug zusammen mit dem Bandstück mittels Druckerhöhung vom Greifer (G) abgelöst wird.

10. Verfahren nach Anspruch 9, **dadurch gekennzeichnet, dass** das Zwischenstück den zweiten Teil (45b) eines zweiteiligen Inserts bildet, wobei der erste Teil (45a) des Inserts vorgängig im Werkzeug positioniert wurde, worauf anschliessend der zweite Teil mit dem dazwischen liegenden Bandstück auf den ersten Teil positioniert und fixiert wird.

11. Verfahren nach einem der vorangehenden Ansprüche, **dadurch gekennzeichnet, dass** von einer Endlosfaser-Bandpresse (31) konsolidierte und abgelängte Bandstücke (B) hergestellt, im heissen plastischen Zustand von einem Austragsband (36) aufgenommen werden, dass durch positioniertes Ablegen von einem oder mehreren Bandstücken eine Endlosfaser-Tragstruktur (4) gebildet wird und dass vor oder nach der Endlosfaser-Ablage im Werkzeug zusätzlich eine plastifizierte Langfaser-Masse (2) ins Werkzeug eingebracht und anschliessend zusammen mit der Endlosfaser-Tragstruktur verpresst und verschmolzen wird zur Bildung eines Strukturbauteils (1).

12. Verfahren nach einem der vorangehenden Ansprüche, **dadurch gekennzeichnet, dass** Endlosfaser-Bandstücke auf ein Transfergitter (41) positioniert abgelegt werden zur Bildung einer vorgeformten Tragstruktur.

13. Verfahren nach einem der vorangehenden Ansprüche, **dadurch gekennzeichnet, dass** Endlosfaser-Bandstücke auf eine Hilfsform (42) positioniert abgelegt werden zur Bildung einer vorgeformten Tragstruktur, welche anschliessen in einer Presse (60) mit einer plastifizierten Langfaser-Masse (2) zusammen verpresst wird zur Bildung eines Strukturbauteils (1).

14. Vorrichtung zur Ausübung des Verfahrens nach Anspruch 1, **gekennzeichnet durch** eine Band-Transfervorrichtung (T) mit mindestens zwei Greifern (G), welche verschiebbar, drehbar und schwenkbar auf einem Verschieberahmen (V) angeordnet sind und welcher Verschieberahmen von einem Roboter (R) räumlich bewegbar und drehbar ist zum einseitigen Kontaktieren und Aufnehmen von plastifizierten Endlosfaser-Bandstücken (B) an einer Ausgabestelle (35),zum Transfer und zum positionierten Ablegen der Bandstücke in einem Werkzeug (W) in einer gewünschten vorgebbaren Lage (82), wobei die Greifer Kontaktflächen (12) aufweisen und mit aktiv bewegbaren Abstreifern (14, 15) unmittelbar an den Kontaktflächen der Greifer versehen sind, wobei die Greifer mit Abstreifern eine Anziehungskraft (Kz) beim Aufnehmen ausüben, die grösser ist als das Gewicht des Bandstücks, und eine Abstossungskraft (Kd) beim Ablegen ausüben, die grösser ist als die Klebekraft (Kk) der geschmolzenen Endlosfaser-Bandstücke an den Kontaktflächen der Greifer, und mit einer Steuerung (71) zum programmierten automatischen Bewegen der Greifer am Verschieberahmen und des Roboters.

15. Vorrichtung nach Anspruch 14, **gekennzeichnet durch** Vakuumgreifer mit relativ kleinen Kontaktflächen (12) und grossen Saugflächen (11) und mit Zuleitungen (13) für Vakuum und Druckluft zu den Saugflächen.

16. Greifer für eine Vorrichtung nach Anspruch 14 oder 15, **gekennzeichnet durch** bewegbare, aktive, von der Umgebungsluft gekühlte Abstreifer (14, 15) mit hoher Wärmeleitfähigkeit unmittelbar an den Kontaktflächen des Greifers zum Ablösen der Bandstücke (B) vom Greifer.

17. Greifer nach Anspruch 16, welcher individuell bewegbar an einem Verschieberahmen (V) angeordnet ist, **dadurch gekennzeichnet, dass** der Greifer mehrere Segmente (18) aufweist, welche je eine grosse Saugfläche (11) mit separater Druckluftzuführung (13) und eine umgebende rahmenförmige kleine Kontaktfläche (12) aufweisen.

18. Greifer nach Anspruch 16 oder 17, **gekennzeichnet durch** bewegbare Abstreifer beidseitig (15) an den Längskanten der Kontaktflächen (12).

19. Greifer nach Anspruch 16 oder 17, **dadurch gekennzeichnet, dass** die Abstreifer pneumatisch bewegbar sind und eine Ventilwirkung aufweisen.

20. Greifer nach Anspruch 16 oder 17, **dadurch gekennzeichnet, dass** die Greifer aus thermisch isolierendem Material bestehen und anti-adhäsive Kontaktflächen (12) aufweisen.

21. Greifer nach Anspruch 16 oder 17, **dadurch gekennzeichnet, dass** mindestens die Kontaktflächen (12) aus PTFE bestehen.

22. Greifer nach Anspruch 16 oder 17, **dadurch gekennzeichnet, dass** die Greifer (G) im Verschieberahmen (V) aktiv und passiv bewegbar sind zum Ausgleich von Längen- und Lageänderungen der Bandabschnitte beim Bewegen und zum Kippen der Greifer beim Ablösen der Bandstücke.

23. Anlage zur Herstellung von faserverstärkten thermoplastischen Strukturbauteilen mit einer Band-Transfereinrichtung (T) mit Greifern (G), welche bewegbare aktive Abstreifer unmittelbar an den Kontaktflächen der Greifer aufweisen nach Anspruch 14, **gekennzeichnet durch** eine Endlosfaser-Plastifiziereinrichtung (30) mit einer Ausgabestelle (35), ein Werkzeug (W) in einer Presse (60), eine Langfaser-Plastifiziereinrichtung (52), mit einer Langfaser-Transfereinrichtung (54) zum formgerechten Einbringen der plastifizierten Langfaser-Masse (2) in das Werkzeug und **durch** eine die Band-Transfersteuerung (71) enthaltende Systemsteuerung (70).

24. Anlage nach Anspruch 23, **gekennzeichnet durch** eine Endlosfaser-Bandpresse (31) mit einem Endlosfaser-Austragband (36) und **durch** eine Langfaser-Transfereinrichtung (54) mit Nadelgreifern zum einseitigen Aufnehmen und formgerechtem Ablegen von plastifizierter Langfaser-Masse (2) im Werkzeug, sowie mit Fixierelementen und Inserts im Werkzeug.

25. Anlage nach Anspruch 23, **dadurch gekennzeichnet, dass** mehr als eine EF-Plastifiziereinrichtung (30, 30.2) mit zugeordneter Band-Transfereinrichtung (T) vorgesehen ist.

## Claims

1. Method for the transferring and positioning of continuous fibre tapes or - strands in a tool and for the manufacturing of structural components made out of fibre-reinforced plastic material, wherein continuous fibre tape pieces from an output point (35) by means of a tape transfer apparatus (T) are contacted by movable grippers (G) comprising contact surfaces (12) on one side on at least two tape ends (Be) and are picked up by the exercising of a force of attraction (Kz) and are subsequently transferred to a tool and deposited in a positioned manner, **characterised in that**
thermoplastic, plasticized, pre-consolidated and cut-to-length continuous fibre tape pieces (B) are produced and the positioned continuous fibre tape pieces (B) in the tool (W) are once again detached from the tape transfer apparatus (T) by the exercising of a repulsive force (Kd), wherein movable active strippers (14, 15) are utilised directly on the contact surfaces (12) of the grippers (G).

2. Method according to claim 1, **characterised in that** for the detachment strippers with a high thermal conductivity (14, 15) cooled by the ambient air are briefly pressed against the tape piece (B).

3. Method according to claim 1 or 2, **characterised in that** a force of attraction (Kz) is exercised at suction surfaces (11) of the grippers by means of vacuum support and a repulsive force (Kd) is exercised by means of a pressure increase at the suction surfaces (11) of the grippers.

4. Method according to one of the preceding claims, **characterised in that** the suction force, resp., force of attraction (Kz) exercised on the whole suction surface (11) of the grippers is greater than the weight of the tape piece to be transported and that the suction surface (11) of the grippers is several times larger than its contact surface (12) with the tape piece (B).

5. Method according to one of the preceding claims, **characterised in that** the grippers (G) of the tape transfer apparatus are capable of being moved individually and under control for the alignment of the contact surfaces (12) to the tape surface and to the required positioning (82) of the tape piece in the tool.

6. Method according to one of the preceding claims, **characterised in that** several grippers (Gi) pick up the tape piece at several points and position it individually under control and sequentially deposit it.

7. Method according to one of the preceding claims, **characterised in that** the strippers (14, 15) are pneumatically moved by over-pressure.

8. Method according to one of the preceding claims, **characterised in that** the grippers are tilted (81) for the detachment of the tape piece.

9. Method according to one of the preceding claims, **characterised in that** on one of the grippers prior to the contacting of the tape piece an intermediate component (insert) (44, 45) is applied to a suction surface (11) of the gripper and held by means of vacuum support, thereupon the insert is brought into contact with the tape piece and stuck on and that the insert (44) following the positioning in the tool together with the tape piece is detached from the gripper (G) by means of a pressure increase.

10. Method according to claim 9, **characterised in that** the intermediate component forms the second part (45b) of a two-piece insert, wherein the first part (45a) of the insert has been positioned in the tool beforehand, whereupon subsequently the second part with the tape piece lying in between is positioned on the first part and fixed.

11. Method according to one of the preceding claims, **characterised in that** tape pieces (B) manufactured by being consolidated and cut-to-length by a continuous fibre tape press (31) are picked up by a delivery belt (36) in the hot, ductile condition, that by means of a positioned depositing of one or several tape pieces a continuous fibre load-bearing structure (4) is formed and that prior to or following the continuous fibre depositing in the tool in addition a plasticized long-fibre mass (2) is fed into the tool and subsequently together with the continuous fibre load-bearing structure is pressed and fused together for the formation of a structural component (1).

12. Method according to one of the preceding claims, **characterised in that** continuous fibre tape pieces are deposited on to a transfer grating (41) in a positioned manner for the formation of a pre-formed load-bearing structure.

13. Method according to one of the preceding claims, **characterised in that** continuous fibre tape pieces are deposited on to an auxiliary mould (42) in a positioned manner for the formation of a pre-formed load-bearing structure, which subsequently is pressed in a press (60) together with a plasticized long-fibre mass (2) for the formation of a structural component (1).

14. Apparatus for implementing the method according to claim 1, **characterised by** a tape transfer apparatus (T) with at least two grippers (G), which are arranged on a displacement frame (V) capable of being displaced, rotated and swivelled and which displacement frame is capable of being three-dimensionally moved and rotated by a robot (R) for the purpose of one-sided contacting and picking up of plasticized continuous fibre tape pieces (B) at an output point (35), for the transferring and for the depositing in a positioned manner of the tape pieces in a tool (W) in a required pre-definable position (82), wherein the grippers comprise contact surfaces (12) and are equipped with actively movable strippers (14, 15) directly on the contact surfaces of the grippers, wherein the grippers with strippers exercise a force of attraction (Kz) during the picking-up operation, which is greater than the weight of the tape piece, and a repulsive force (Kd) during the depositing, which is greater than the adhesive force (Kk) of the molten continuous fibre tape pieces at the contact surfaces of the grippers, and with a control system (71) for the programmed automatic movement of the grippers on the displacement frame and of the robot.

15. Apparatus according to claim 14, **characterised by** vacuum grippers with relatively small contact surfaces (12) and large suction surfaces (11) and with feed lines (13) to the suction surfaces for vacuum and compressed air.

16. Gripper for an apparatus according to claim 14 or 15, **characterised by** movable, active strippers (14, 15) cooled by the ambient air with a high thermal conductivity immediately on the contact surfaces of the gripper for the detachment of the tape pieces (B) from the gripper.

17. Gripper according to claim 16, which is arranged on a displacement frame (V) capable of being individually moved, **characterised in that** the gripper comprises several segments (18), each of which respectively comprises a large suction surface (11) with separate compressed air supply (13) and a surrounding, frame-shaped small contact surface (12).

18. Gripper according to claim 16 or 17, **characterised by** movable strippers (15) on both sides on the longitudinal edges of the contact surfaces (12).

19. Gripper according to claim 16 or 17, **characterised in that** the strippers are capable of being pneumatically moved and comprise a valve effect.

20. Grippers according to claim 16 or 17, **characterised in that** the grippers consist of thermally insulating material and comprise anti-adhesive contact surfaces (12).

21. Gripper according to claim 16 or 17, **characterised in that** at least the contact surfaces (12) consist of PTFE.

22. Grippers according to claim 16 or 17, **characterised in that** the grippers (G) are capable of being actively and passively moved in the displacement frame (V) for the compensation of length - and positional changes of the tape sections during the movement and for the tilting of the grippers during the detachment of the tape pieces.

23. Installation for the manufacturing of fibre-reinforced thermo-plastic structural components with a tape transfer apparatus (T) with grippers (G), which comprise movable active strippers directly on the contact surfaces of the grippers according to claim 14, **characterised by** a continuous fibre plasticizing appliance (30) with an output point (35), a tool (W) in a press (60), a long-fibre plasticizing appliance (52), with a long-fibre transfer appliance (54) for the true to form depositing of the plasticized long-fibre mass (2) in the tool and by a system control system (70) containing a tape transfer control system (71).

24. Installation according to claim 23, **characterised by** a continuous fibre tape press (31) with a continuous fibre delivery belt (36) and by a long-fibre transfer appliance (54) with needle grippers for the one-sided picking-up and true to form depositing of plasticized long-fibre mass (2) in the tool as well as with fixing elements and inserts in the tool.

25. Installation according to claim 23, **characterised in that** more than one EF - plasticizing appliance (30, 30.2) with assigned tape transfer appliance (T) is provided.

## Revendications

1. Procédé de transfert et de positionnement de bandes ou de brins en fibres continues dans un outil et de fabrication d'éléments de structure en matière plastique renforcée de fibres, des pièces de bande en fibres continues étant mises en contact unilatéralement à au moins aux deux extrémités de bande (Be), à une zone de sortie (35), à partir d'un dispositif de transfert de bandes (T), par des grappins mobiles (G) avec des surfaces de contact (12) et prises par l'exercice d'une force d'attraction (Kz) puis transférées vers un outil et déposées dans une certaine position, **caractérisé en ce que** des pièces de bandes (B) en fibres continues thermoplastiques, plastifiées, préconsolidées et coupées à longueur sont créées et les pièces de bandes en fibres continues (B) placées en position sont à nouveau détachées du dispositif de transfert de bande (T) dans l'outil (W), par l'exercice d'une force d'expulsion (Kd), des racleurs actifs mobiles (14, 15) étant utilisés directement sur les surfaces de contact (12) des grappins (G).

2. Procédé selon la revendication 1, **caractérisé en ce que** pour le détachement, des racleurs (14, 15) refroidis par l'air environnant à haute capacité de conduction thermique sont brièvement pressés contre la pièce de bande (B).

3. Procédé selon l'une quelconque des revendications 1 ou 2, **caractérisé en ce qu'**une force d'attraction (Kz) est exercée sous assistance de vide sur des surfaces d'aspiration (11) des grappins et une force d'expulsion (Kd) est exercée par augmentation de pression sur les surfaces d'aspiration (11) des grappins.

4. Procédé selon l'une quelconque des revendications précédentes, **caractérisé en ce que** la force d'aspiration ou la force d'attraction (Kz) exercée sur l'ensemble de la surface d'aspiration (11) est supérieure au poids de la pièce de bande à transporter et **en ce que** la surface d'aspiration (11) des grappins est plusieurs fois supérieure à leur surface de contact (12) avec la pièce de bande (B).

5. Procédé selon l'une quelconque des revendications précédentes, **caractérisé en ce que** les grappins (G) du dispositif de transfert de bande sont mobiles individuellement et de façon pilotée, pour l'orientation des surfaces de contact (12) sur la surface de la bande et pour le positionnement (82) souhaité de la pièce de bande dans l'outil.

6. Procédé selon l'une quelconque des revendications précédentes, **caractérisé en ce que** plusieurs grappins (Gi) prennent la pièce de bande en plusieurs endroits et la positionnent de façon individuellement pilotable et séquentielle.

7. Procédé selon l'une quelconque des revendications précédentes, **caractérisé en ce que** les racleurs (14, 15) sont déplacés par voie pneumatique, par surpression.

8. Procédé selon l'une quelconque des revendications précédentes, **caractérisé en ce que** les grappins sont basculés (81) pour le détachement de la pièce de bande.

9. Procédé selon l'une quelconque des revendications précédentes, **caractérisé en ce qu'**avant la mise en contact de la pièce de bande, une pièce intermédiaire (44 , 45) (insert) est montée sur un grappin, sur la surface d'aspiration (11) du grappin et maintenue par assistance de vide, **en ce qu'**ensuite la pièce intermédiaire est mise en contact et collée avec la pièce de bande et **en ce qu'**à l'issue de son positionnement dans l'outil, la pièce intermédiaire (44) est détachée du grappin (G), en commun avec la pièce de bande, par augmentation de la pression.

10. Procédé selon la revendications 9, **caractérisé en ce que** la pièce intermédiaire forme le second élément (45b) d'un insert en deux éléments, le premier élément (45a) de l'insert ayant été préalablement positionné dans l'outil, suite à quoi le second élément est positionné avec la pièce de bande intermédiaire sur le premier élément, puis fixé.

11. Procédé selon l'une quelconque des revendications précédentes, **caractérisé en ce que** des pièces de bandes (B) consolidées et coupées à longueur sont fabriquées dans une presse à bandes (31) à fibres continues, qu'elles sont prises par une bande de sortie (36) dans l'état plastique chaud, **en ce que** par une dépose en position d'une ou de plusieurs pièce(s) de bande (s), une structure porteuse en fibres continues (4) est formée et **en ce qu'**avant ou après la dépose des fibres continues dans l'outil, une masse plastifiée de fibres longues (2) est introduite en supplément dans l'outil, puis pressée en commun et fusionnée avec la structure porteuse en fibres continues, pour la formation d'un élément de structure (1).

12. Procédé selon l'une quelconque des revendications précédentes, **caractérisé en ce que** des pièces de bande en fibres continues sont déposées en position sur un treillis de transfert (41), pour la formation d'une structure porteuse préformée.

13. Procédé selon l'une quelconque des revendications précédentes, caractérisé en ce des pièces de bande en fibres continues sont déposées en position sur un moule auxiliaire (42), pour la formation d'une structure porteuse préformée, qui est ensuite pressée dans une presse (60) avec une masse plastifiée en fibres longues (2) pour la formation d'un élément de structure (1).

14. Dispositif pour l'application du procédé selon la revendication 1, **caractérisé par** un dispositif de transfert de bande (T) avec au moins deux grappins (G), qui sont disposés de façon déplaçable, rotative et pivotante sur un cadre de déplacement (V), lequel cadre de déplacement étant déplaçable et rotatif dans l'espace par un automate (R), pour la mise en contact unilatérale et la préhension de pièces de bandes plastifiées (B) en fibres continues sur une zone de sortie (35), pour le transfert et la dépose en position des pièces de bande dans un outil (W), dans une position souhaitée prédéfinie (82), les grappins étant munis de surfaces de contact (12) et de racleurs (14, 15) activement mobiles directement sur les surfaces de contact des grappins, les grappins avec les racleurs exerçant lors de la préhension une force d'attraction (Kz) qui est supérieure au poids de la pièce de bande et exerçant lors de la dépose une force d'expulsion (Kd) qui est supérieure à la force d'adhérence (Kk) des pièces de bandes fondues en fibres continues sur les surfaces de contact des grappins et par un système de commande (71) pour le déplacement automatique programmé des grappins sur le cadre de déplacement et de l'automate.

15. Dispositif selon la revendication 14, **caractérisé par** des grappins sous vide avec des surfaces de contact relativement petites (12) et avec de grandes surfaces d'aspiration (11) et avec des conduites d'arrivées (13) du vide et de l'air comprimé vers les surfaces d'aspiration.

16. Grappin pour un dispositif selon l'une quelconque des revendications 14 ou 15, **caractérisé par** des racleurs (14, 15) mobiles, actifs et refroidis par l'air environnant, à haute capacité de conduction thermique, directement sur les surfaces de contact du grappin, pour détacher la pièce de bande (B) du grappin.

17. Grappin selon la revendication 16, disposé de façon individuellement mobile sur un cadre de déplacement (V), **caractérisé en ce que** le grappin présente plusieurs segments (18), présentant chacun une grande surface d'aspiration (11) avec des alimentations séparées en air comprimé (13) et une petite surface de contact (12) périphérique en forme de cadre.

18. Grappin selon l'une quelconque des revendications 16 ou 17, **caractérisé par** des racleurs mobiles des deux côtés (15) sur les bords longitudinaux des surfaces de contact (12).

19. Grappin selon l'une quelconque des revendications 16 ou 17, **caractérisé en ce que** les racleurs sont mobiles par voie pneumatique et ont un effet de soupape.

20. Grappin selon l'une quelconque des revendications 16 ou 17, **caractérisé en ce que** les grappins sont constitués en matériau isolant thermique et sont munis de surfaces de contact (12) anti-adhésive.

21. Grappin selon l'une quelconque des revendications 16 ou 17, **caractérisé en ce qu'**au moins les surfaces de contact sont en PTFE.

22. Grappin selon l'une quelconque des revendications 16 ou 17, **caractérisé en ce que** les grappins (G) sont mobiles de façon active et passive dans le cadre de déplacement (V), pour compenser les modifications de longueur et de position des sections de bandes lors du déplacement et pour basculer les grappins lors du détachement des pièces de bandes.

23. Installation pour la fabrication d'éléments de structure thermoplastiques renforcés par fibres, avec un système de transfert de bandes (T) avec des grappins (G), munis de racleurs actifs mobiles, directement sur les surfaces de contact des grappins selon la revendication 14, **caractérisée par** un système de plastification de fibres continues (30) avec une zone de sortie (35), par un outil (W) dans une presse (60), par un système de plastification de fibres longues (52), avec un système de transfert des fibres longues (54) pour l'introduction selon la forme de la masse plastifiée de fibres longues (2) dans l'outil et par une commande du système (70) contenant la commande de transfert de bandes (71).

24. Installation selon la revendication 23, **caractérisée par** une presse de bandes en fibres continues (31) avec un tapis d'évacuation des fibres continues (36) et par un système de transfert des fibres longues (54), avec des grappins à aiguille pour la préhension unilatérale et pour la dépose selon la forme de masses plastifiées de fibres longues (2) dans l'outil ainsi qu'avec des éléments de fixation et des inserts dans l'outil.

25. Installation selon la revendication 23, **caractérisée en ce qu'**un système de plastification EF (30, 30.2) avec système de transfert de bandes (T) associé est prévu.
